# EUROPÄISCHE PATENTSCHRIFT

(11) **EP 1 966 010 B1**
(45) Veröffentlichungstag und Bekanntmachung des Hinweises auf die Patenterteilung: **24.02.2010**
(21) Anmeldenummer: 06807596.9
(22) Anmeldetag: 27.10.2006
(51) Int. Cl.: B60S 1/04, B60S 1/58

(54) **SCHEIBENWISCHANLAGE FÜR EIN FAHRZEUG, INSBESONDERE HECKSCHEIBENWISCHANLAGE FÜR EIN KRAFTFAHRZEUG**
WINDOW WIPER SYSTEM FOR A VEHICLE, IN PARTICULAR A REAR WINDOW WIPER SYSTEM FOR A MOTOR VEHICLE
EQUIPEMENT ESSUIE-GLACE POUR VEHICULE, NOTAMMENT EQUIPEMENT ESSUIE-GLACE ARRIERE POUR VEHICULE AUTOMOBILE

(30) Priorität: 22.12.2005 DE 102005061385
(43) Veröffentlichungstag der Anmeldung: 10.09.2008
(73) Patentinhaber: ROBERT BOSCH GMBH, 70442 Stuttgart (DE)
(72) Erfinder: FRIDERICHS, Guenther, 77836 Schwarzach (DE); GEUBEL, Paul, 76534 Baden-Baden (DE)
(86) Internationale Anmeldenummer: PCT/EP2006/067844
(87) Internationale Veröffentlichungsnummer: WO 2007/073954

(56) Entgegenhaltungen:
- EP-A- 0 532 384
- EP-A- 0 814 004
- EP-A2- 1 375 270
- WO-A-2006/076947
- FR-A1- 2 749 243
- FR-A1- 2 842 154

## Beschreibung

Die Erfindung betrifft eine Scheibenwischanlage für ein Fahrzeug, insbesondere eine Heckscheibenwischanlage für ein Kraftfahrzeug, gemäß dem Oberbegriff des Anspruchs 1.

### Stand der Technik

Heckscheibenwischanlagen von Kraftfahrzeugen umfassen in der Regel als Wischerantrieb einen im Inneren des Kraftfahrzeugs untergebrachten Wischermotor mit einem angeflanschten Untersetzungsgetriebe sowie eine über das Untersetzungsgetriebe vom Wischermotor angetriebene Wischerwelle, die durch eine Montageöffnung in einem unter- oder oberhalb der Heckscheibe angeordneten Karosserieteil oder durch eine Montageöffnung in der Heckscheibe selbst nach außen ragt und an ihrem freien Ende einen auf der Heckscheibe aufliegenden Wischarm trägt. Zur Befestigung am Fahrzeug weist der Wischerantrieb zumeist drei Befestigungsfüße auf, die mit einem benachbarten Karosserieteil des Fahrzeugs verschraubt oder vernietet werden. Zur Vermeidung einer Übertragung von Geräuschen in die Karosserie sind an den Befestigungsfüßen gewöhnlich Dämpfungsgummis mit Distanzhülsen vorgesehen. Um ein Eindringen von Feuchtigkeit ins Innere des Kraftfahrzeugs entlang der Wischerwelle zu verhindern, ist am Wischerantrieb häufig auch noch eine Schutzkappe befestigt, welche die Wischerwelle auf einem Teil ihrer Länge dichtend umgibt und sich durch eine Durchtrittsöffnung einer in der Montageöffnung fixierten Gummidichtung erstreckt, die dichtend gegen die Umfangsfläche der Schutzkappe anliegt.

Eine solche Scheibenwischanlage weist jedoch einige Nachteile auf: Da die Befestigungspunkte von Fahrzeugtyp zu Fahrzeugtyp nicht selten variieren, müssen die Fertigungswerkzeuge an eine veränderte Position der Befestigungsfüße angepasst werden, wodurch nicht unerhebliche Kosten entstehen. Wegen verhältnismäßig großer Toleranzen der Befestigungspunkte in axialer und in radialer Richtung der Wischerwelle sind zudem die axiale Position des freien Stirnendes der Wischerwelle in Bezug zur Heckscheibe und die radiale Position der Wischerwelle in Bezug zur Mitte der Montageöffnung erfahrungsgemäß beträchtlichen Schwankungen ausgesetzt, was u.a. zu einer zu hohen oder zu niedrigen Auflagekraft die Wischerarms auf der Heckscheibe bzw. zu einer einseitigen radialen Pressung der Gummidichtung in der Montageöffnung und/oder der Schutzkappe auf der Wischerwelle führen kann. Darüber hinaus ist die Montage derartiger Scheibenwischanlagen etwas kompliziert, da der Wischerantrieb mit einer Hand festgehalten und gleichzeitig mit der anderen Hand ein Montagewerkzeug betätigt werden muss. Nicht zuletzt werden zur Befestigung und zur Abdichtung relativ viele Teile benötigt.

Aus der EP-A-0 532 384 ist eine an einer Scheibe festgeklebte Halterung bekannt, an der der Wischerantrieb durch Verrasten befestigbar ist.

Diese Scheibenwischanlage mit den im Oberbegriff des Anspruchs 1 angegebenen Merkmalen hat mehrere Vorteile. Zum ersten kann die Schnittstelle zum Fahrzeug vereinheitlicht werden, womit Werkzeugkosten eingespart und die Anzahl der benötigten Teile verringert werden können. Zum zweiten ist die Toleranzkette aufgrund der in Bezug zur Montageöffnung genau positionierbaren Halterung und dem nach dem Verrasten in Bezug zur Halterung in einer definierten Position befindlichen Wischerantrieb kürzer, was eine genauere axiale und radiale Position der Wischerwelle in Bezug zur Heckscheibe bzw. zur Montageöffnung und damit geringere Schwankungen der Auflagekraft des Wischerarms bzw. eine geringere radiale Pressung eines zur Abdichtung der Montageöffnung dienenden Dichtungselements zur Folge hat. Zum dritten kann das zur Abdichtung der Montageöffnung dienende Dichtungselement in direkten Dichteingriff mit der Wischerwelle gebracht werden, so dass eine zusätzliche Schutzkappe auf der Wischerwelle entbehrlich und damit eine Kosten- und Gewichtsersparnis möglich ist. Zum vierten kann durch die vereinfachte Handhabung des Wischerantriebs bei seiner Montage die Arbeitsergonomie verbessert und die Taktzeit am Montageband verkürzt werden. Zum fünften werden wegen der geringeren Anzahl von Befestigungs- und Dichtungselementen weniger Teile benötigt, was zu geringeren Lagerhaltungskosten führt.

### Vorteile der Erfindung

Erfindungsgemäß ist vorgesehen, dass die Halterung neben einem Rastelement zur Verrastung mit dem Wischerantrieb ein Dämpfungselement umfasst, das zwischen dem Rastelement und dem Karosserieteil oder der Scheibe angeordnet ist, wobei es einen integralen Teil eines zur Abdichtung der Montageöffnung dienenden gummielastischen oder elastomeren Formkörpers (Grommet) bildet, das heißt als Einheit mit diesem ausgebildet ist und vorzugsweise aus demselben Material wie dieser besteht.

Eine weitere bevorzugte Ausgestaltung der Erfindung sieht vor, die Halterung um die Montageöffnung herum an der Innenseite des Karosserieteils oder der Scheibe zu befestigen, vorzugsweise indem das Dämpfungselement mittels eines Klebers um die Montageöffnung herum gegen die Innenseite des Karosserieteils oder der Scheibe anliegend am Karosserieteil bzw. an der Scheibe festgeklebt wird, so dass der Wischerantrieb nach dem Aushärten des Klebers auf dem vom Karosserieteil bzw. der Scheibe abgewandten Rastelement aufgerastet werden kann.

Um die Montageöffnung um die Wischerwelle herum abzudichten, umfasst der gummielastische oder elastomere Formkörper vorzugsweise ein einstückig mit dem Dämpfungselement ausgebildetes Dichtungselement, der sich um die Wischerwelle herum durch die Montageöffnung erstreckt, zweckmäßig mit mindestens einer gegen die Wischerwelle anliegenden Dichtlippe versehen ist und einen Rand der Montageöffnung auf der Außenseite des Karosserieteils oder der Scheibe hintergreift.

Um einerseits das Verrasten des Wischerantriebs mit der Halterung zu erleichtern und andererseits für einen festen Sitz des Wischerantriebs auf der Halterung zu sorgen, wird das Rastelement zweckmäßig von einem äußeren Umfangsrand einer gegen das Dämpfungselement anliegend mit diesem verbundenen Rastplatte gebildet, wobei dieser Umfangsrand quer zur Richtung der Wischerwelle über das Dämpfungselement übersteht, und beim Verrasten des Wischerantriebs mit einer komplementären Rastnut in Eingriff gebracht wird, die an einem mit dem Wischerantrieb verbundenen Befestigungselement vorgesehen ist. Die Rastnut ist zweckmäßig in der Innenseite eines in Richtung der Wischerwelle überstehenden axialen Umfangswulstes eingeformt, der ein erweitertes freies Stirnende aufweist, so dass sich der Umfangsrand der Rastplatte durch eine in Richtung des Karosserieteils oder der Scheibe auf den Wischerantrieb ausgeübte axiale Druckkraft über das erweiterte Stirnende des Wulstes in die Rastnut drücken lässt. Der Umfangswulst kann zwischen der Rastnut und seinem dem Karosserieteil oder der Scheibe zugewandten erweiterten Stirnende eine Einführschräge aufweisen, die das Überdrücken des Umfangsrandes der Rastplatte über das Stirnende des Wulstes erleichtert. Vorzugsweise wird der Wulst beim Aufdrücken auf die Rastplatte verformt, so dass er anschließend unter Vorspannung gegen den Umfangsrand der Rastplatte angepresst wird.

### Zeichnung

Die Erfindung wird nachfolgend in einem Ausführungsbeispiel anhand der zugehörigen Zeichnungen näher erläutert. Es zeigen:
- Fig. 1: eine Seitenansicht eines Wischerantriebs einer Heckscheibenwischanlage eines Kraftfahrzeugs und einer mit dem Wischerantrieb verrasteten, zur Befestigung des Wischerantriebs an einer Heckscheibe des Kraftfahrzeugs dienenden Halterung;
- Fig. 2: eine perspektivische Ansicht des Wischerantriebs ohne die Halterung;
- Fig. 3: eine Schnittansicht der Halterung und eines Teils des Wischerantriebs nach der Montage an der Heckscheibe;
- Fig. 4: eine um 90 Grad gedrehte vergrößerte Ansicht des Ausschnitts IV aus Figur 3.

### Beschreibung des Ausführungsbeispiels

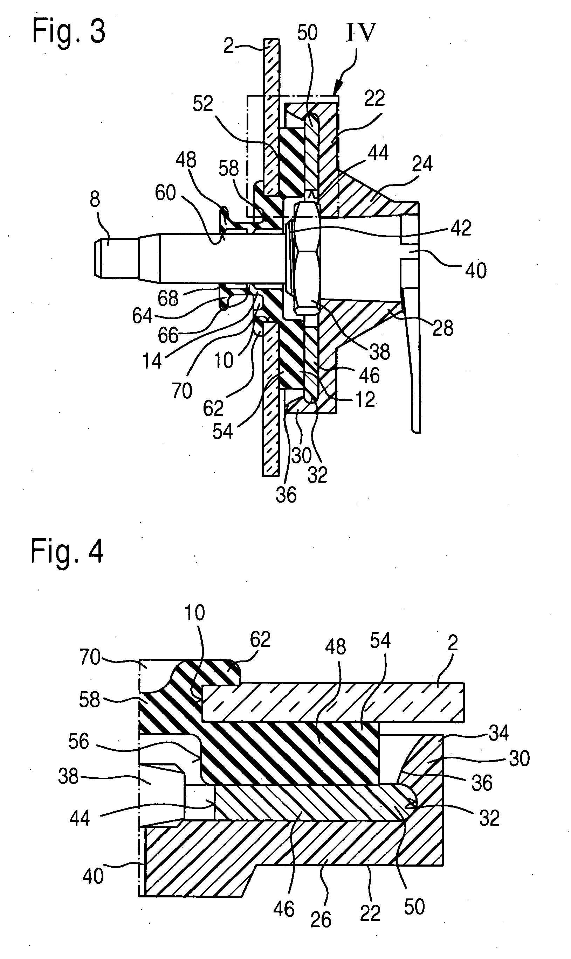

Die in der Zeichnung nur teilweise dargestellte, zur Reinigung einer Heckscheibe 2 eines Personenkraftwagens dienende Heckscheibenwischanlage 4 besteht im Wesentlichen aus einem im Inneren des Personenkraftwagens in der Nähe des unteren Randes der Heckscheibe 2 untergebrachten Wischerantrieb 6, dessen Wischerwelle 8 durch eine Montageöffnung 10 (Fig. 3) in der Heckscheibe 2 aus dem Personenkraftwagen heraus zur Außenseite der Heckscheibe 2 geführt ist, sowie einem außerhalb des Personenkraftwagens drehfest und lösbar auf dem freien Ende der Wischerwelle 8 befestigten Wischerarm (nicht dargestellt).

Wie am besten in Fig. 3 dargestellt, ist der Wischerantrieb 6 mit einer an der Innenseite der Heckscheibe 2 festgeklebten Halterung 12 verrastet, die außer zur lösbaren Befestigung des Wischerantriebs 6 auch zur Abdichtung eines Ringspalts 14 zwischen der Wischerwelle 8 und dem benachbarten Rand der kreisförmigen Montageöffnung 10 sowie zur Schwingungsentkopplung des Wischerantriebs 6 von der Heckscheibe 2 bzw. einer mit der Heckscheibe 2 bestückten Heckklappe des Personenkraftwagens dient und damit eine im Inneren des Personenkraftwagens zu hörbaren Geräuschen führende Übertragung von Körperschall aus dem Wischerantrieb 6 in die Heckklappe verhindert.

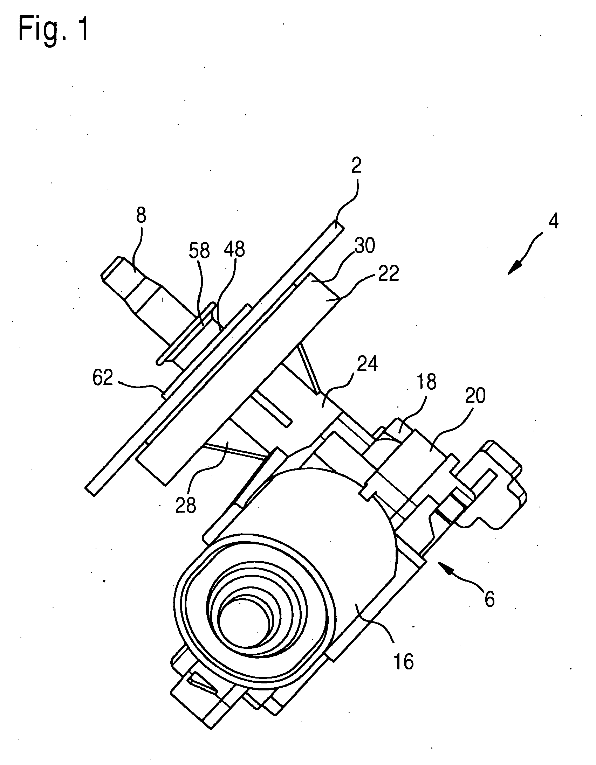

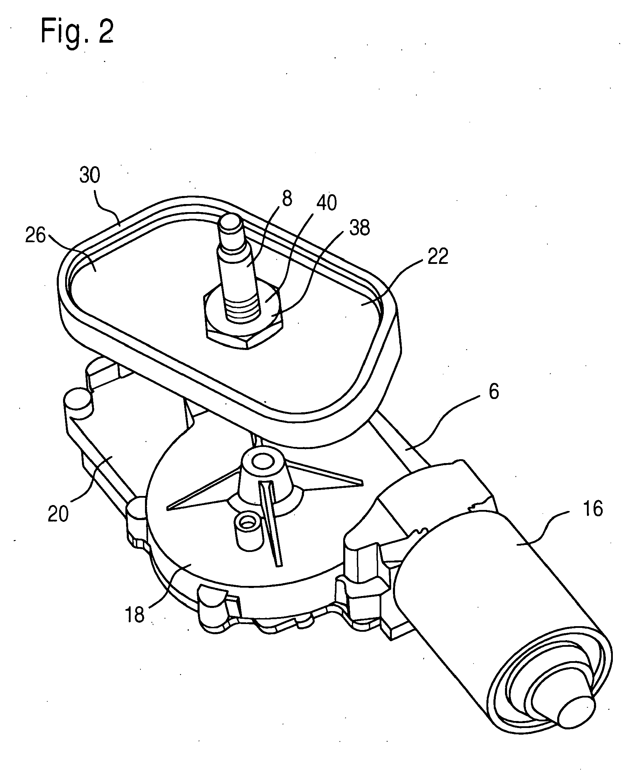

Wie am besten in den Figuren 1 und 2 dargestellt, umfasst der Wischerantrieb 6 in bekannter Weise einen Gleichstrom-Wischermotor 16, sowie ein daran angeflanschtes Untersetzungsgetriebe 18, dessen Abtriebswelle die Wischerwelle 8 bildet und senkrecht zur Drehachse des Wischermotors 16 über ein Getriebegehäuse 20 des Untersetzungsgetriebes 18 übersteht.

Der Wischerantrieb 6 umfasst weiter ein zur Verrastung an der Halterung 12 dienendes Befestigungselement 22, das den zum Getriebegehäuse 20 benachbarten Teil der Wischerwelle 8 umgibt und am Getriebegehäuse 20 befestigt ist. Wie am besten in den Figuren 1, 2 und 3 dargestellt, weist das zum Beispiel durch Spritzgießen aus einem hartelastischen Kunststoffmaterial hergestellte Befestigungselement 22 einen auf dem Getriebegehäuse 20 abgestützten Fußteil 24 und einen einstückig mit dem Fußteil 24 ausgebildeten Rastteller 26 auf.

Der zylindrische oder leicht konische Fußteil 24 ist in regelmäßigen Winkelabständen mit radial überstehende angeformten Versteifungsstreben 28 versehen, die sich bis zu der dem Antrieb 6 zugewandten Unterseite des Rasttellers 26 erstrecken und einstückig mit diesem verbunden sind, so dass sie ein Verbiegen des Rasttellers 26 beim Verrasten des Wischerantriebs 6 auf der Halterung 12 verhindern.

Der im Umriss näherungsweise nierenförmige Rastteller 26 weist auf seiner vom Antrieb 6 abgewandten Oberseite einen entlang seines Umfangs nach oben überstehenden Umfangswulst 30 auf, der an seiner Innenseite mit einer zur Wischerwelle 8 hin offenen eingeformten Rastnut 32 und zwischen der Rastnut 32 und seinem freien oberen Stirnende 34 mit einer umlaufenden Einführschräge 36 versehen ist (Fig. 4), so dass die Innenseite des Wulstes 30 zwischen dessen oberem Stirnende 34 und der Rastnut 32 einen abnehmenden Abstand von der Wischerwelle 8 aufweist.

Das Befestigungselement 22 wird auf dem Getriebegehäuse 20 von einer Sechskantmutter 38 festgehalten, die auf ein Außengewinde 42 am freien Ende eines röhrenförmigen Stutzens 40 des Getriebegehäuses 20 aufgeschraubt ist, der sich um die Wischerwelle 8 herum durch den Fußteil 24 des Befestigungselements 22 erstreckt. Die Mutter 38 liegt gegen die Oberseite des Rasttellers 26 an und drückt das Befestigungselement 22 in axialer Richtung der Wischerwelle 8 in formschlüssigen Eingriff mit einem entsprechend geformten Widerlager des Getriebegehäuses 20.

Wie am besten in den Figuren 2 und 3 dargestellt, besteht die Halterung 12 im Wesentlichen aus einer zur Verrastung des Wischerantriebs 6 dienenden, mit einer Durchtrittsöffnung 44 für die Wischerwelle 8 versehenen scheibenförmigen Rastplatte 46, und einem die Rastplatte 46 tragenden, sowohl zur Abdichtung des Ringspalts 14 als auch zur Schwingungsdämpfung dienenden Formkörper 48 aus einem für diesen Zweck geeigneten gummielastischen Material, der fest mit der Rastplatte 46 verbunden ist.

Die stabile, zum Beispiel durch Spritzgießen aus einem starren Kunststoffmaterial, wie Hart-PVC, hergestellte Rastplatte 46 weist eine der Breite der Rastnut 32 des Befestigungselements 22 entsprechende Dicke auf, die ausreichend groß bemessen ist, so dass sich die Rastplatte 46 unter den beim Verrasten des Wischerantriebs 6 bzw. bei den im Betrieb der Scheibenwischanlage 4 einwirkenden Belastungen nicht verformen kann. Die Rastplatte 46 besitzt einen zur Verrastung in der Rastnut 32 des Umfangswulstes 30 des Rasttellers 26 dienenden, zur Rastnut 32 komplementären äußeren Umfangsrand 50, dessen jeweiliger Abstand von der Wischerwelle 8 jedoch geringfügig größer als der entsprechende Abstand eines Nutbodens der Rastnut 32 ist, so dass der Umfangswulst 30 und damit das Befestigungselement 22 nach seinem Verrasten auf dem Umfangsrand 50 der Rastplatte 26 mit einer ausreichenden Spannkraft gegen die Rastplatte 46 angepresst wird, um die im Betrieb der Scheibenwischanlage 4 auftretenden bzw. in deren Lastenheft angegebenen Belastungen ohne die Gefahr eines Lösens des Rasttellers 26 von der Rastplatte 46 in die letztere und von dort über den gummielastischen Formkörper 48 der Halterung 12 weiter in die Heckscheibe 2 bzw. in die Heckklappe abzuleiten.

Der gummielastische Formkörper 48 besteht im Wesentlichen aus einem zur Schwingungsentkopplung dienenden, mittels einer Kleberschicht 52 um die Montageöffnung 10 herum an der Innenseite der Heckscheibe 2 festgeklebten, im Wesentlichen ebenen Dämpfungsteil 54 mit einer Durchlassöffnung 56 für die Wischerwelle 8, sowie einem den Ringspalt 14 zwischen der Wischerwelle 8 und dem Rand der Montageöffnung 10 verschließenden Dichtungsteil 58 oder Grommet, der entlang eines Begrenzungsrandes der Durchlassöffnung 56 um die Wischerwelle 8 herum einstückig mit dem Dämpfungsteil 54 verbunden ist.

Der Dämpfungsteil 54 weist einen zum Umriss der Rastplatte 46 kongruenten Umriss auf, ist jedoch etwas kleiner als die Rastplatte 46, so dass deren Umfangsrand 50 allseitig etwas über einen äußeren Begrenzungsrand des Dämpfungsteils 54 übersteht.

Der Dichtungsteil 58 weist eine Durchtrittsöffnung 60 für die Wischerwelle 8 auf, deren Innendurchmesser kleiner als der Innendurchmesser der Durchlassöffnung 56 ist und erstreckt sich durch die Montageöffnung 10 hindurch nach außen, wo er den Rand der letzteren mit einer umlaufenden Dichtrippe 62 hintergreift. Im Bereich der Umfangsfläche der Wischerwelle 8 umfasst der Dichtungsteil 58 eine ein Stück weit entlang der Wischerwelle 8 überstehende Gummitülle 64 mit zwei im Abstand voneinander gegen die Umfangsfläche der Wischerwelle 8 anliegenden Dichtlippen 66, 68 und einem erweiterten äußeren Stirnende. Um die Nachgiebigkeit des Dichtungsteils 58 innerhalb des Ringspalts 14 zu vergrößern, ist in diesem Bereich von außen her eine Ringnut 70 in den Dichtungsteil 58 eingeformt.

Der gummielastische Formkörper 48 ist entlang einer von der Heckscheibe 2 abgewandten ebenen Breitseitenfläche des Dämpfungsteils 54 fest mit der Rastplatte 46 verbunden. Dazu kann der Formkörper 48 entweder nach einer getrennten Herstellung auf die Rastplatte 46 aufgeklebt oder alternativ dazu in einem geeigneten Formwerkzeug unter Bildung eines 2-Komponenten-Bauteils einstückig an die Rastplatte 46 angeformt werden.

## Patentansprüche

1. Scheibenwischanlage für ein Fahrzeug, insbesondere Heckscheibenwischanlage für ein Kraftfahrzeug, mit einem Wischerantrieb zur Montage im Inneren des Fahrzeugs, einer vom Wischerantrieb angetriebenen Wischerwelle zum Hindurchführen durch eine Montageöffnung in einem Karosserieteil oder einer Scheibe des Fahrzeugs, sowie einem Wischerarm zur Montage auf der Wischerwelle außerhalb des Fahrzeugs, wobei der Wischerantrieb (6) nach dem Hindurchführen der Wischerwelle (8) durch die Montageöffnung (10) mit einer an der Innenseite des Karosserieteils oder der Scheibe (2) fest montierbaren Halterung (12) verrastet ist, und wobei die Halterung (12) mindestens ein Rastelement (46, 50) zur Verrastung mit dem Wischerantrieb (6) aufweist, **dadurch gekennzeichnet, dass** zwischen dem Rastelement (46, 50) und dem Karosserieteil oder der Scheibe (2) ein Dämpfungselement (54) angeordnet ist, das einen integralen Teil eines zur Abdichtung der Montageöffnung (12) dienenden gummielastischen oder elastomeren Formkörpers (48) bildet.

2. Scheibenwischanlage nach Anspruch 1, **dadurch gekennzeichnet, dass** die Halterung (12) um die Montageöffnung (10) herum fest mit der Innenseite des Karosserieteils oder der Scheibe (2) verbindbar ist.

3. Scheibenwischanlage nach Anspruch 1, **dadurch gekennzeichnet, dass** der Formkörper (48) ein einstückig mit dem Dämpfungselement (54) ausgebildetes Dichtungselement (58) umfasst, das sich nach der Verrastung des Wischerantriebs (6) um die Wischerwelle (8) herum durch die Montageöffnung (10) erstreckt.

4. Scheibenwischanlage nach Anspruch 3, **dadurch gekennzeichnet, dass** das Dichtungselement (58) mindestens eine gegen die Wischerwelle (8) anliegende Dichtlippe (66, 68) aufweist.

5. Scheibenwischanlage nach Anspruch 3 oder 4, **dadurch gekennzeichnet, dass** das Dichtungselement (58) nach der Verrastung des Wischerantriebs (6) einen Rand der Montageöffnung (10) auf der Außenseite des Karosserieteils oder der Scheibe (2) hintergreift.

6. Scheibenwischanlage nach einem der Ansprüche 1 bis 5, **dadurch gekennzeichnet, dass** das Dämpfungselement (54) um die Montageöffnung (10) herum gegen die Innenseite des Karosserieteils oder der Scheibe (2) anliegend am Karosserieteil bzw. an der Scheibe festgeklebt wird.

7. Scheibenwischanlage nach einem der Ansprüche 1 bis 6, **dadurch gekennzeichnet, dass** das Rastelement (46, 50) einen quer zur Wischerwelle (8) über das Dämpfungselement (54) überstehenden Umfangsrand einer gegen das Dämpfungselement (54) anliegenden und fest mit dem Dämpfungselement (54) verbundenen Rastplatte (46) umfasst, der beim Verrasten des Wischerantriebs (6) in eine zur Wischerwelle (8) hin offene komplementäre Rastausnehmung (32) eines am Wischerantrieb (6) angebrachten Befestigungselements (22) einschnappt.

8. Scheibenwischanlage nach Anspruch 7, **dadurch gekennzeichnet, dass** das Befestigungselement (22) nach dem Verrasten des Wischerantriebs (6) an der Halterung (12) unter Vorspannung gegen das Rastelement (46, 50) angepresst wird.

## Claims

1. Window wiper system for a vehicle, in particular rear window wiper system for a motor vehicle, having a wiper drive for mounting in the interior of the vehicle, having a wiper shaft, which is driven by the wiper drive, for leading through a mounting opening in a body part or in a window of the vehicle, and having a wiper arm for mounting on the wiper shaft outside the vehicle, with the wiper drive (6) being latched to a bracket (12), which can be fixedly mounted on the inner side of the body part or of the window (2), after the wiper shaft (8) has been led through the mounting opening (10), and with the bracket (12) having at least one latching element (46, 50) for latching to the wiper drive (6), **characterized in that** a damping element (54) is arranged between the latching element (46, 50) and the body part or the window (2), which damping element (54) forms an integral part of a resiliently elastic or elastomeric moulded body (48) which serves to seal off the mounting opening (12).

2. Window wiper system according to Claim 1, **characterized in that** the bracket (12) can be fixedly connected to the inner side of the body part or of the window (2) around the mounting opening (10).

3. Window wiper system according to Claim 1, **characterized in that** the moulded body (48) comprises a seal element (58) which is formed in one piece with the damping element (54) and which, after the latching of the wiper drive (6), extends around the wiper shaft (8) and through the mounting opening (10).

4. Window wiper system according to Claim 3, **characterized in that** the seal element (58) has at least one sealing lip (66, 68) which bears against the wiper shaft (8).

5. Window wiper system according to Claim 3 or 4, **characterized in that**, after the latching of the wiper drive (6), the seal element (58) engages behind an edge of the mounting opening (10) on the outer side of the body part or of the window (2).

6. Window wiper system according to one of Claims 1 to 5, **characterized in that** the damping element (54) is fixedly adhesively bonded to the body part or to the window around the mounting opening (10) and so as to bear against the inner side of the body or of the window (2).

7. Window wiper system according to one of Claims 1 to 6, **characterized in that** the latching element (46, 50) comprises a circumferential edge, which projects transversely with respect to the wiper shaft (8) beyond the damping element (54), of a latching plate (46) which bears against the damping element (54) and which is fixedly connected to the damping element (54) and which, when the wiper drive (6) is latched, snaps into a complementary latching recess (32), which is open in the direction of the wiper shaft (8), of a fastening element (22) which is attached to the wiper drive (6).

8. Window wiper system according to Claim 7, **characterized in that**, after the wiper drive (6) is latched to the bracket (12), the fastening element (22) is pressed under preload against the latching element (46, 50).

## Revendications

1. Installation d'essuie-glace pour un véhicule, en particulier installation d'essuie-glace pour vitre arrière pour un véhicule, comprenant un entraînement d'essuie-glace destiné à être monté à l'intérieur du véhicule, un arbre d'essuie-glace entraîné par l'entraînement d'essuie-glace et destiné à être guidé à travers une ouverture de montage dans une partie de la carrosserie ou une vitre du véhicule, ainsi qu'un bras d'essuie-glace destiné à être monté sur l'arbre d'essuie-glace en dehors du véhicule, l'entraînement d'essuie-glace (6) étant encliqueté après le guidage de l'arbre d'essuie-glace (8) à travers l'ouverture de montage (10) avec une fixation (12) pouvant être montée fixement sur le côté intérieur de la partie de la carrosserie ou de la vitre (2), et la fixation (12) présentant au moins un élément d'encliquetage (46, 50) pour l'encliquetage avec l'entraînement d'essuie-glace (6), **caractérisée en ce que** l'on dispose entre l'élément d'encliquetage (46, 50) et la partie de la carrosserie ou la vitre (2) un élément d'amortissement (54) qui forme une partie intégrale d'un corps moulé (48) élastique en caoutchouc ou en élastomère servant à étancher l'ouverture de montage (12).

2. Installation d'essuie-glace selon la revendication 1, **caractérisée en ce que** la fixation (12) peut être connectée autour de l'ouverture de montage (10) fixement au côté intérieur de la partie de la carrosserie ou de la vitre (2).

3. Installation d'essuie-glace selon la revendication 1, **caractérisée en ce que** le corps moulé (48) comprend un élément d'étanchéité (58) réalisé d'une seule pièce avec l'élément d'amortissement (54), qui s'étend après l'encliquetage de l'entraînement d'essuie-glace (6) tout autour de l'arbre d'essuie-glace (8) à travers l'ouverture de montage (10).

4. Installation d'essuie-glace selon la revendication 3, **caractérisée en ce que** l'élément d'étanchéité (58) présente au moins une lèvre d'étanchéité (66, 68) s'appliquant contre l'arbre d'essuie-glace (8).

5. Installation d'essuie-glace selon la revendication 3 ou 4, **caractérisée en ce que** l'élément d'étanchéité (58) vient en prise après l'encliquetage de l'entraînement d'essuie-glace (6) derrière un bord de l'ouverture de montage (10) sur le côté extérieur de la partie de la carrosserie ou de la vitre (2).

6. Installation d'essuie-glace selon l'une quelconque des revendications 1 à 5, **caractérisée en ce que** l'élément d'amortissement (54) est collé fixement tout autour de l'ouverture de montage (10) à la partie de la carrosserie ou à la vitre, en s'appliquant contre le côté intérieur de la partie de la carrosserie ou de la vitre (2).

7. Installation d'essuie-glace selon l'une quelconque des revendications 1 à 6, **caractérisée en ce que** l'élément d'encliquetage (46, 50) présente un bord périphérique dépassant, transversalement à l'arbre d'essuie-glace (8) au-delà de l'élément d'amortissement (54), d'une plaque d'encliquetage (46) s'appliquant contre l'élément d'amortissement (54) et connectée fixement à l'élément d'amortissement (54), lequel bord s'encliquète, lors de l'encliquetage de l'entraînement d'essuie-glace (6), dans un évidement d'encliquetage (32) d'un élément de fixation (22) monté sur l'entraînement d'essuie-glace (6), complémentaire et ouvert vers l'arbre d'essuie-glace (8).

8. Installation d'essuie-glace selon la revendication 7, **caractérisée en ce que** l'élément de fixation (22), après l'encliquetage de l'entraînement d'essuie-glace (6), est pressé contre la fixation (12) avec précontrainte contre l'élément d'encliquetage (46, 50).
